# EUROPEAN PATENT APPLICATION

(11) **EP 2 336 559 A1**
(43) Date of publication of application: **22.06.2011**
(21) Application number: 09179257.2
(22) Date of filing: 15.12.2009
(51) Int. Cl.: F03D 11/00

(54) **Lightning current transfer unit for a wind turbine**

(71) Applicant: Vestas Wind Systems A/S, 8940 Randers - SV (DK)
(72) Inventor: Folkmann, Kim, 8940 Randers (DK)
(74) Representative: Lippich, Wolfgang

(57) **Abstract**

A lightning current transfer unit (LCTU) is arranged to transfer lightning current from a wind turbine's first part to a second part rotatable relative to each other. The LCTU (3) has at least one contact slider (8) arranged to contact a complementary contact rail (4), which is movable relative to it, to transfer lightning current from the first part to the second part. The contact slider (8') has a slide piece (29), a pivoted lever (32), and a spring (39). The slide piece (29) is mounted on the pivoted lever (32) and is biased towards the contact rail (4) in a contact-force direction (c). The spring (39) applies an elastic spring force to the pivoted lever (32) in a spring-force direction (s). The spring-force direction (s) is at an angle (α) to the contact-force direction (c). The pivoted lever (32) diverts the spring force from the spring-force direction (s) to the contact-force direction (c).

## Description

### FIELD OF THE INVENTION

The present invention relates to lightning current conduction in wind turbines and, for example, to a lightning current transfer unit for a wind turbine, and a wind turbine comprising one or more lightning current transfer units.

### BACKGROUND OF THE INVENTION

A lightning current transfer unit for a wind turbine is known, for example, from WO 2005/050008. It enables lightning current to be transferred from a rotor blade of the wind turbine to the wind turbine's nacelle by means of two contact sliders each contacting a complementary contact rail. The contact sliders have slide pieces mounted on a base support by means of elastically deformable flat strips, which bias the contact pieces towards the complementary contact rails (see e.g. Figs. 3a, 3b and 4 of WO 2005/050008).

Another type of lightning transfer unit has been proposed in EP 1154537 A2. It is arranged to enable lightning current to be transferred from a wind turbine's nacelle to the tower by means of a contact slider with a slide piece biased towards a complementary ring by means of a spring. The spring is directly mounted on the slide piece so that the direction in which the spring produces force is the direction in which the slide piece slider is biased towards the ring (see Fig. 8 of EP 1154537 A2).

According to EP 01577551 A2 spark gaps to transfer lightning current between parts rotatable relatively to each other (rotor blade/rotor hub; rotor shaft/nacelle; nacelle/tower) are provided. Contact sliders are connected in parallel with the spark gaps in order to enable charges to be discharged continuously. Each contact slider has a slide piece biased towards a complementary contact rail by means of a spring. As in EP 1154537 A2 mentioned above, the spring is directly mounted on the slide piece and produces force in the same direction in which the slide piece is biased towards the contact rail (see Fig. 2-4 of EP 01577551 A2).

A lightning current transfer unit for a wind turbine is provided. The wind turbine comprises at least a first part and a second part rotatable relative to each other. The lightning current transfer unit comprises at least one contact slider arranged to contact a complementary contact rail, which is movable relative to the contact slider, to transfer lightning current from the first part to the second part. The contact slider comprises: a slide piece, at least one pivoted lever, and at least one spring. The slide piece is mounted on the pivoted lever. The slide piece is biased towards the complementary contact rail in a contact-force direction. The spring applies an elastic spring force to the pivoted lever in a spring-force direction. The spring-force direction is at an angle to the contact-force direction. The pivoted lever diverts the spring force from the spring-force direction to the contact-force direction.

According to another aspect, a wind turbine is provided comprising at least one lightning current transfer unit.

Other features are inherent in the methods and products disclosed or will become apparent to those skilled in the art from the following description and the accompanying drawings.

### BRIEF DESCRIPTION OF THE DRAWINGS

Embodiments of the present invention are explained by way of example with reference to the accompanying drawings, in which:
Fig. 1 is a schematic diagram of a lightning current transfer assembly with an embodiment of a lightning current transfer unit transferring lightning current between two parts rotatable relative to each other around one axis;
Fig. 2 is a schematic diagram similar to that of Fig. 1, however, with another embodiment of a lightning current transfer unit to transfer lightning current between two parts rotatable relative to each other around two different axes;
Fig. 3 schematically illustrates a wind turbine equipped with an embodiment of a lightning current transfer unit which transfers current between a rotor blade and a rotor hub of the wind turbine;
Fig. 4 is similar to Fig. 3, but illustrates a wind turbine equipped with another embodiment of a lightning current transfer unit which transfers current between a rotor hub and a nacelle of the wind turbine;
Fig. 5 is similar to Figs. 3 and 4, but illustrates a wind turbine equipped with another embodiment of a lightning current transfer unit which transfers current between a rotor blade and a nacelle of the wind turbine;
Fig. 6 schematically illustrates an embodiment of contact slider;
Fig. 7 is a perspective view of an embodiment of a contact slider;
Figs. 8 and 9 are perspective views of an embodiment of a lightning current transfer unit of the type illustrated in Figs. 2 and 5, without and with a spark-gap assembly;
Fig. 10 is a perspective view of another embodiment of a lightning current transfer unit.

The drawings and the description of the drawings are of embodiments of the invention and not of the invention itself.

### GENERAL DESCRIPTION OF EMBODIMENTS

Before turning to the detailed description of the embodiments shown in the drawings, a few more general items will first be discussed.

Wind turbines are commonly equipped with a lightning conductor system. For example, in some of the embodiments each rotor blade of a wind turbine has a lightning receptor near its tip, and sometimes further receptors along the blade. The lightning receptor, or receptors, can be connected with a lightning conductor along the rotor blade. The lightning current path continues through the nacelle and down the tower of the wind turbine to the earth. The lightning current also has to pass between parts rotatable relative to each other, for example from the rotor blade to the rotor hub, from the rotor hub to the nacelle (or directly from the rotor blade to the nacelle), and from the nacelle to the tower.

In the embodiments, a lightning current transfer unit is provided which transfers lightning current from a first part to a second part rotatable relative to each other. In principle, it is possible to transfer lightning current from one part to another part rotatable relative to each other solely by means of a spark gap with spark-gap electrodes movable relative to each other (as, for example, in DE 4436197 A1). However, without a galvanic connection there is no permanent discharge-current path which would allow charges from static charging to be permanently discharged. The embodiments therefore pertain to a lightning current transfer unit that provides a galvanic connection between the two parts rotatable relative to each other. In some embodiments a spark gap with movable spark-gap electrodes may be connected in parallel to the galvanic connection, as in EP 01577551 A2 mentioned at the outset; in other embodiments the galvanic connection is the only connection between the two parts rotatable relative to each other provided by the lightning current transfer unit, i.e. there is no parallel spark gap with moveable spark-gap electrodes.

Galvanic connection is generally provided by contact elements mechanically contacting each other while being movable relative to each other. Galvanic connection can, in principle, also be provided by roller contacts, as, for example, in EP 1568883 A2. However, it is not certain that contact arrangements based on roller contacts provide a reliable galvanic connection if the voltage across the contact is small, because oxide layers and dirt are not always removed by a roller contact. The embodiments of a lightning current transfer unit described in this description are based on sliding-contact arrangements to ensure that a permanent galvanic connection is provided to enable charges from static charging to be reliably discharged. A sliding-contact arrangement comprises a contact slider and a complementary contact rail movable relative to the contact slider. The contact slider has a slide piece biased towards the contact rail and in mechanical contact with it. The elastic biasing of the slide piece towards the contact rail compensates for variations in the distance between the lightning current transfer unit and the contact rail that may occur upon relative rotation, so that mechanical and electrical contact between the contact slider and contact rail is maintained.

The embodiments of the lightning current transfer unit have one or more contact sliders. Although the complementary contact rail is mechanically contacted by the slide piece upon relative rotation of the contact slider and the complementary contact rail, the contact rail does not form part of the lightning current transfer unit itself. The contact rail is, for example, a full ring or ring sector attached e.g. to the root of a rotor blade, the rotor hub, the nacelle, or the head of the tower. If the relative rotation does not extend to full revolutions (such as the rotation between the rotor hub and the nacelle), but is limited to an only partial revolution (less than 360°, such as the rotation between a pitchable rotor blade and the rotor hub), the complementary rail may be a ring sector (also called "belt"). It extends over a limited angular range, at least corresponding to the angular range of the relative rotation concerned.

In some embodiments the slide piece is a rigid member, while in other embodiments it may be a device having some elasticity to mechanically contact the contact rail on its own, e.g. a sort of electrically conductive brush.

In some of the embodiments the lightning current transfer unit comprises a pivoted lever and a spring for each slide piece. The slide piece is mounted on its pivoted lever. For example, in embodiments in which the lightning current transfer unit has two contact sliders, there are two pivoted levers and two springs. In some embodiments, the spring, or each of the springs, is a compressed helical spring (or coil spring).

Each slide piece is biased towards the complementary contact rail in a contact-force direction by its associated spring. The spring applies its elastic spring force to the pivoted lever associated with it in a spring-force direction. The spring-force direction is at an angle to the contact-force direction. In other words, the pivoted lever diverts the spring force from the spring-force direction to the contact-force direction.

This diversion of the spring-force enables the lightning current transfer unit to be designed in a compact manner, in particular if it accommodates not only one, but two or more contact sliders.

Furthermore, in some embodiments the lengths of the lever arms at which the spring force is applied and on which the slide piece is mounted are different, so that the spring force is transformed: the contact force is reduced relative to the spring force if the spring-lever arm is shorter than the slide-piece-lever arm, and it is increased relative to the spring force if the spring-lever arm is longer than the slide-piece-lever arm.

The angle between the spring-force direction and the contact-force direction is, in some embodiments between 30° and 150°, in other embodiments between 45° and 135°. In some of the embodiments, the spring-force direction is transverse to the contact-force direction. Thus, the pivoted lever diverts the spring force by about 90°. Such an arrangement is particularly useful in embodiments of the lightning current transfer unit with two contact sliders arranged back-to-back, because it enables the two slide pieces to be arranged at a distance from each other smaller than the length of one spring in its operational state in the spring-force direction. For example, in embodiments with a helical spring, or springs, this is the length of the spring in its axial direction when it is compressed such that the slide piece contacts its contact rail.

In some of those embodiments with two contact sliders arranged back-to-back the surfaces of the two slide pieces lie in parallel planes, and the two (e.g. helical) springs are arranged with their axes parallel to each other and the slide piece surfaces.

In some embodiments the slide piece is pivotally mounted on the pivoted lever. This enables the slide piece to adapt its orientation parallel to the complementary contact rail when the lever is swivelled. Parallelism is then automatically maintained by the elastic pressure on the slide piece towards the contact rail. This pivotal mounting of the slide piece is not mandatory, as in other embodiments the angular change of the slide piece's orientation due to lever swivel is negligible, or the slide piece may have a slightly crowned surface.

In some embodiments the slide piece comprises an electrically conductive contact pad and a wear pad which surrounds the conductive contact pad at least partially. Both the conductive contact pad and the wear pad form a common plane surface in mechanical contact with the contact rail. The wear pad enlarges the mechanically sliding surface of the slide piece beyond the electrically effective slide-piece surface, and allows a material to be chosen (e.g. a high-strength plastic) which exhibits less wear than the conductive contact pad. This enables the contact slider to be operated without some of the restrictions associated with the conductive contact pad. For example, a relatively high contact force can be chosen to prevent slider lift-off while keeping wear of the conductive contact pad low, due to pressure reduction as a consequence of the enlargement of the slide piece's surface by the wear pad, and due to the wear pad's superior wear characteristic.

In order to isolate the contact slider, or sliders, of the lightning current transfer unit from the support to which it is mounted, e.g. from the rotor hub, in some embodiments the lightning current transfer unit comprises a base support made of insulating material, e.g. insulating plastic. In some embodiments the isolating base support supports the pivoted lever with the slide piece. In some embodiments of the lightning current transfer unit with two contact sliders, the base support is a common support of both the pivoted levers and slide pieces. The base support may be made as an integral part.

In some embodiments, the pivoted lever is pivotally mounted around a swivel axis on the base support either directly, or indirectly with interposition of a member fixed to the base support.

In some embodiments, the spring, or each spring, is accommodated in a spring cylinder. In some of those embodiments, the cylinder, or cylinders, is/are mounted on the base support, and the pivoted lever is pivotally mounted on its associated spring cylinder. The spring cylinder may thus form the member interposed between the base support and the pivoted lever on which the latter is mounted. In some embodiments, the member/spring cylinder and/or the pivoted lever are also made of insulating material, e.g. insulating plastic.

In some embodiments the base support is in the general form of an elevated platform with side walls and is a hollow body defined by the platform and the side walls. In order to mount the spring cylinder, or cylinders, on the platform a spring-cylinder mounting is provided for the, or each, spring cylinder. A spring-cylinder mounting may, e.g., be a bracket with a semi-cylindrical shape.

In some of the embodiments with two contact sliders the two slide pieces are positioned at different levels above the basis of the base support, depending on the relative position of the two associated contact rails. For example, only one of the spring-cylinder mountings is mounted on the elevated platform, while the other is located at a lower level. In other embodiments, however, the two slide pieces are at the same height; both spring-cylinder mountings are on the elevated platform.

In some embodiments the lightning current transfer unit is arranged to transfer lightning current between parts rotatable relative to each other around a single axis, for example between a rotor blade and the rotor hub or shaft, or between the rotor hub or shaft and the nacelle, or between the nacelle and the tower of the wind turbine. Consequently, in some embodiments the "first part" and the "second part" rotatable relative to each other are a rotor blade and a rotor hub or shaft, or a rotor hub or shaft and a nacelle, or a nacelle and a tower, of the wind turbine.

In other embodiments, however, the lightning current transfer unit is arranged to transfer lightning current between parts rotatable relative to each other around two different axes. For example, a pitchable rotor blade and the nacelle exhibit relative rotation around two different axes. In some such embodiments with two different axes the lightning current transfer assembly comprises at least two contact sliders electrically connected in series. Then, the "first part" is a rotor blade, and the "second part" is a nacelle of the wind turbine. In some of these embodiments, the lightning current transfer unit is arranged to be mounted on the rotor hub. It thereby provides a direct lightning-current path from the rotor blade to the nacelle by means of at least one first contact slider towards the rotor blade and at least one second contact slider towards the nacelle.

The rotor shaft (and the load-carrying parts of the hub and the nacelle) of a wind turbine are usually made of electrically conductive material, and the bearing rings and rolling elements of big bearings (such as the blade-pitch bearings, the main-shaft bearing, and the yaw bearing) are usually also electrically conductive. Consequently, if the lightning current path is not electrically isolated from the rotor hub, a fraction or all of the lightning current could pass through the blade-pitch bearing and/or the main-shaft bearing. As the durability of bearings might be reduced by exposure to lightning current crossing the bearings, in some embodiments with a lightning current transfer unit mounted on the rotor hub, the current path provided by the lightning current transfer unit is electrically isolated from the rotor hub. Thereby, lightning current bypasses the rotor hub and the rotation-enabling bearings between the rotor blade and the rotor hub and between the rotor hub and the nacelle (e.g. the blade-pitch and main-shaft bearings).

Moreover, in some embodiments, the complementary contact rail at the blade root, which is normally electrically connected to a lightning receptor at the blade tip, is also electrically isolated from the blade pitch bearing. This can be achieved, for example, by the blade being made only of insulating material at the blade root, such as glass-fibre reinforced plastics. This ensures that lightning current can hardly reach the hub via the blade pitch bearing. Lightning current will then flow directly from the rotor blade to the nacelle, bypassing the blade-pitch and main-shaft bearings.

In some embodiments with two contact sliders, the first contact slider towards the rotor blade and the second contact slider towards the nacelle are connected by a wire. As the distance between the two (e.g. elastically biased) contact sliders of the lightning current transfer unit is not necessarily constant, in some embodiments the contact sliders are connected by a flexible wire.

In some of these embodiments, the flexible wire directly spans the gap between the two contact sliders, which are, e.g., arranged back-to-back, the flexible wire running above the base support.

In order to reduce the span width of the flexible wire, in some embodiments the flexible wire is supported by an isolating stand mounted on the base support.

In some embodiments a spark gap (with non-movable spark-gap electrodes) is interposed in the wire connecting the first and second contact sliders. In embodiments with an isolating stand, the spark gap may be mounted on the isolating stand. In some embodiments a resistance is connected in parallel with the spark gap to render the permanent-discharge current path high-ohmic, while still enabling lightning current to be lead to ground via the spark gap. A high-ohmic permanent-discharge current path may be useful to ensure electro-magnetic compatibility (EMC) in certain situations. Momentary slider lift-off may occur, and might cause rapidly rising currents if the discharge current path is low-ohmic, which in turn might cause electro-magnetic interference in certain situations. Rendering the discharge-current path high-ohmic by interposing a spark gap with a resistance in parallel can limit the rise in current and thereby electro-magnetic interference.

The embodiments disclosed herein not only pertain to lightning current transfer units as such, but also to wind turbines equipped with one or more such lightning current transfer units. For example, a wind turbine with n (e.g. three) rotor blades may have one lightning current transfer unit for each rotor blade. That is, n (e.g. three) lightning current transfer units are mounted on the rotor hub, each contacting a complementary contact member (e.g. a ring or belt) at the root of the rotor blade to which it is associated. At the side towards the nacelle, in some embodiments, there is only one contact rail on the nacelle which is shared by the n (e.g. three) lightning current transfer units. The same applies to wind turbines with another number of rotor blades; e.g. a wind turbine with n = 2.

### DETAILED DESCRIPTION OF EMBODIMENTS SHOWN IN THE DRAWINGS

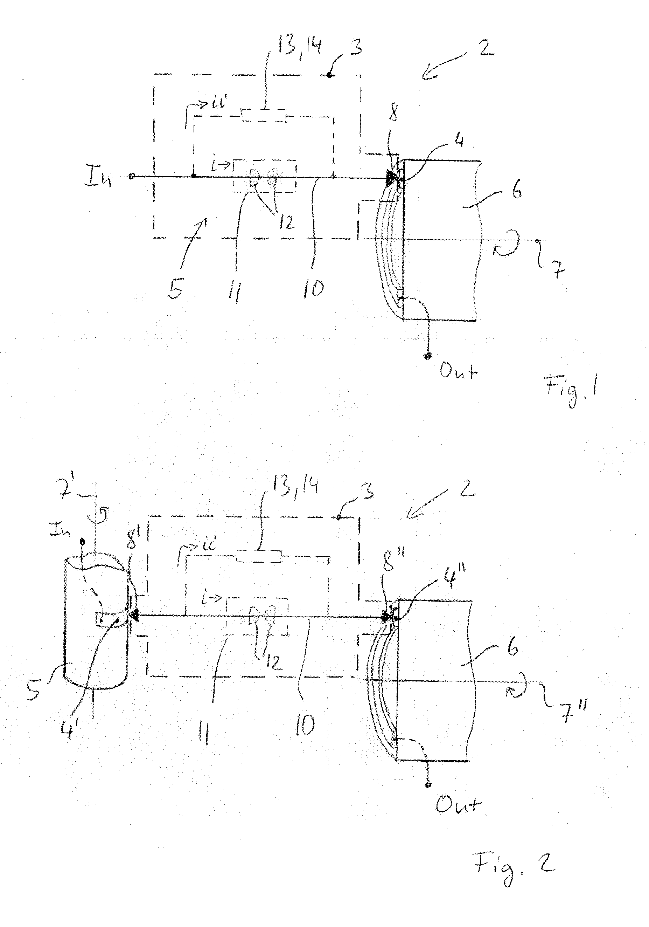

Figs. 1 and 2 (schematic diagrams):
   Figs. 1 and 2 are schematic diagrams of lightning current transfer assemblies 2, each composed of an embodiment of a lightning current transfer unit 3 and a complementary contact rail 4 (Fig. 1) or two complementary contact rails 4', 4" (Fig. 2). The lightning current transfer unit 3 provides a current bridge between two parts 5, 6 rotatable relative to each other. In the embodiment of Fig. 1 the parts 5, 6 electrically bridged by the lightning current transfer unit 3 are rotatable relative to each other around a single axis 7, while in the embodiment of Fig. 2 they are rotatable around two different axes 7', 7". For example, as illustrated in Fig. 2, the two different axes 7', 7" are perpendicular to each other.
   In the embodiment of Fig. 1, the first part 5 is, for example, the lightning current transfer unit 3 itself, while the second part 6 is another part of a wind turbine rotatable relative to it. The axes and arrows in Figs. 1 and 2 symbolise relative rotation; i.e. they do not, as in Fig. 1 for example, indicate that the first part 5 is necessarily stationary while the second part 6 rotates. Rather, the first part 5 can be the rotating part, while the second part 6 can be stationary.
   The embodiment of Fig. 1 has one contact slider 8 contacting a complementary contact rail 4, while the embodiment of Fig. 2 has two contact sliders, denoted by 8' and 8", contacting two complementary contact rails, denoted by 4' and 4". The slider-rail pairs 8, 4; 8', 4'; 8", 4" provide a galvanic connection between the rotatable parts 5, 6 by mechanically contacting each other while being moveable relative to each other.
   The contact rails 4, 4', 4" are rings concentric to the axis 7, 7', 7" of the relative rotation, with a radius relative to the axis 7, 7', 7" which corresponds to the respective contact slider's 8, 8', 8" radial distance from the axis 7, 7', 7". If the angular range of relative rotation is unlimited, the contact rail is a closed ring, as in Fig. 1 and one of the slider-rail pairs of Fig. 2, there denoted by 4 or 4". If, however, the range of relative rotation is limited to less than 360°, the corresponding contact rail will not be a closed ring to cover the range of rotation, but may be a ring sector or 'belt', as shown at 4' in Fig. 2.
   A wire 10 connects an input 'In' and the contact slider 8 (embodiment of Fig. 1) or the two contact sliders 8', 8" (embodiment of Fig. 2). The lightning current transfer assemblies 2 thereby provide a current path from an input 'In' at the first part 5 to an output 'Out' at the second part 6 (wherein In and Out can be interchanged).
   In alternative embodiments a spark gap 11 is interposed in the wire 10. The spark gap 11 and related elements are shown by dashed lines in the Figs. 1 to 5. The spark gap 11 has two spark-gap electrodes 12 spaced apart and isolated from each other, and thereby forming a galvanic interruption of the wire 10 when no spark is fired. A resistance 13, which is e.g. the resistance of a resistor 14, is connected parallel to the spark gap 11 and thereby bridges the spark gap 11. There is no relative rotation between the spark-gap electrodes 12; i.e. the spark-gap electrodes 12 are stationary relative to each other.
   In the alternative embodiments with the spark gap 11 and the spark-gap-bridging resistance 13, the lightning current transfer assemblies 2 thereby provide two alternative current paths, i and ii. In the embodiment of Fig. 1, the first current path i, called "lightning current path", starts at the input In and leads across the spark gap 11 and the slider-rail pairs 8, 4 moveable relative to each to the output Out. The second current path ii, called "permanent-discharge current path", also starts at the input In, but leads through the spark-gap-bridging resistance 13 and the slider-rail pairs 8, 4. In the embodiment of Fig. 2 the alternative current paths i, ii are analogous to those of Fig. 1, but pass through the two electric slider-rail pairs 8', 4'; 8", 4".

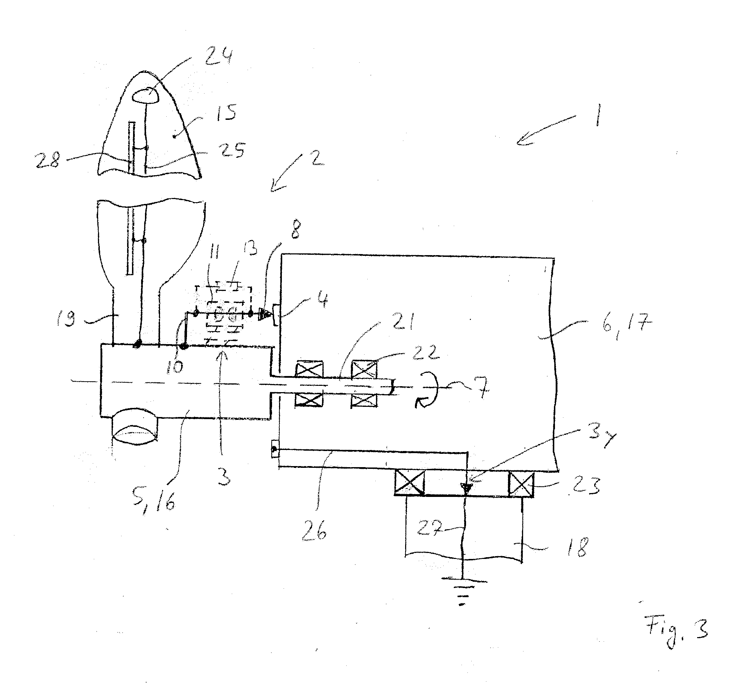

Figs. 3 to 5 (wind turbines equipped with lightning current transfer units):

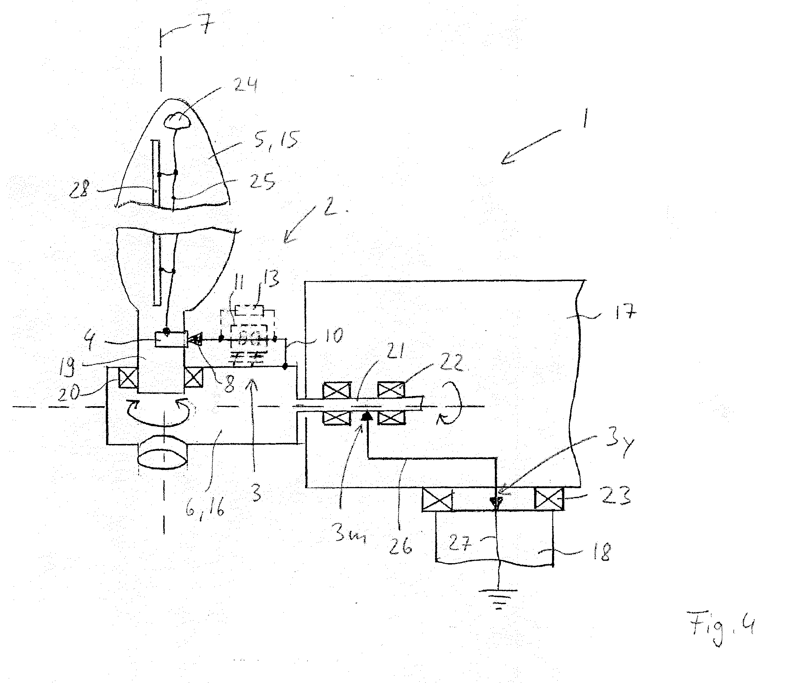

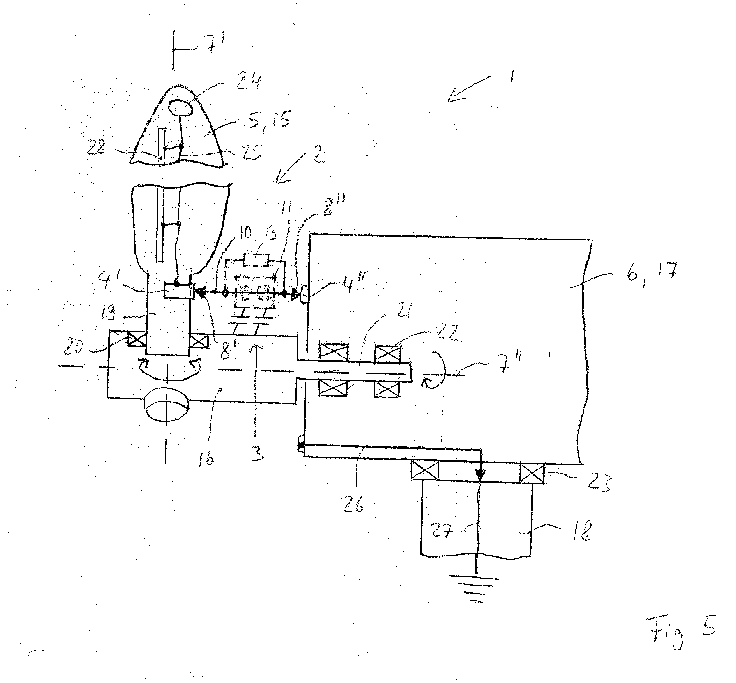

   Figs. 3 to 5 illustrate wind turbines 1 equipped with lightning current transfer assemblies 2 with different embodiments of lightning current transfer units 3. In Figs. 3 and 4 the lightning current transfer units 3 are of the single-axis type shown in Fig. 1, while the embodiment of Fig. 5 has a lightning current transfer unit 3 of the dual-axes type shown in Fig. 2.
   The wind turbines 1 of Figs. 3 to 5 have a plurality of (normally three) rotor blades 15, one of which, and a stump of another one, are shown in Figs. 3 to 5.
   The rotor blades 15 are supported by a rotor hub 16 (the rotor hub 16 is shown extended in its longitudinal direction, in order to provide sufficient space in the drawings to show the lightning current transfer units 3). The rotor hub 16 is supported by a nacelle 17, which rests on a tower 18.
   In the embodiments of Figs. 4 and 5, the rotor blade 15 is pivotally mounted with its root 19 in a blade-pitch bearing 20 on the rotor hub 16. In the examples shown, the pitch angle range is smaller than 360°, e.g. about 180°, or in a preferred embodiment, 100°. In the embodiment of Fig. 3 a wind turbine with fixed (not pitchable) rotor blades 15 is illustrated, because the blade-pitch bearing is absent. This is only exemplary; in other embodiments with the lightning current transfer unit 3 of the type shown in Fig. 3 the rotor blade 15 may also be pitchable, as in Figs. 4 and 5.
   The rotor hub 16 is extended by a main shaft 21 which is pivotably mounted on main-shaft bearings 22 on the nacelle 17. This is also only exemplary, as in other embodiments the rotatable main shaft 21 is replaced by a fixed shaft extending from the nacelle towards the hub, and the hub is then pivoted on the fixed shaft. A yaw bearing 23 enables the nacelle 17 to be rotated relative to the tower 18.
   In all three embodiments of Figs. 3 to 5 a lightning current transfer unit 3 is mounted on the rotor hub 16, and rotates with the rotor hub 16. The contact rails 4, 4', 4" are rotatable relative to the rotor hub 16. The lightning current transfer unit 3 is mounted in such a manner that it is electrically isolated from the rotor hub 16, which is symbolized in Figs. 3 to 5 by broken inclined lines between the lightning current transfer unit 3 and the rotor hub 16.
   In the embodiments of Figs. 3 to 5, the rotor blade 15 is equipped with a lightning receptor 24 near its tip. The lightning receptor 24 is connected to a lightning conductor 25 along the rotor blade 15. The lightning current path continues through the lightning current transfer unit 3, and further through a lightning conductor 26 in the nacelle 17, another lightning current transfer unit 3y bridging the yaw bearing 23, and through a lightning conductor 27 in the tower 18 which is grounded near the root of the tower 18. The lightning conductor 25 is also connected to a charge receptor 28 extending along the length of the rotor blade 15 but not to the root 19. The charge receptor 28 may be any electrically conductive or semi-conductive member in the load-carrying structure of the rotor blade 15 (such as a longitudinal beam including semi-conductive carbon fibres) and/or on the blade's surface (such as a metal skin at the blade's leading edge). The charge receptor 28 is also able to collect the charges originating from static charging. These charges are led to the lightning conductor 25 and flow to the earth along the lightning current path.
   Although only one lightning current transfer unit 3 is shown in Figs. 4 and 5, there will be a plurality of such lightning current transfer units 3, one at each rotor blade 15. In embodiments according to Fig. 5 the plural lightning current transfer units 3 may share a common contact rail 4" at the nacelle 17.
   In the embodiment of Fig. 3, the first part 5 of the two parts 5, 6 rotatable relative to each other is the rotor hub 16, and the second part 6 is the nacelle 17. Consequently, the axis 7 around which the two parts 5, 6 are rotatable relative to each other is the rotation axis of the rotor hub 16.
   The lightning current transfer assembly 2 transfers current between these two parts 5, 6 rotatable relative to each other, i.e. from the rotor hub 16 to the nacelle 17. The input of the lightning current transfer assembly 2 is, for example, electrically connected to the rotor hub 16. The lightning conductor 25 in the rotor blade 15 is also electrically connected to the rotor hub 16, so that current from the rotor blade 15 can flow through the rotor hub 16 into the lightning current transfer assembly 2.
   In other embodiments similar to that of Fig. 3, however, the lightning conductor 25 coming down from the lightning receptor 24 is directly connected to the input of the lightning current transfer assembly 2. Such a connection, e.g. by means of a continuous cable from the lightning receptor 24 to the input of the lightning current transfer assembly 2, is also possible in embodiments with pitchable rotor blades, since the angular pitch range is usually limited, so that the continuous cable will not be overly twisted. Then, if the root 19 of the rotor blade 15 is made of electrically insulating material, practically all the current from the rotor blade 15 will flow through the lightning current transfer assembly 2, so that the rotor-pitch bearing (if applicable), the rotor hub 16, and the main-shaft bearing 22 are electrically bypassed.
   In the embodiment of Fig. 3, the further current path goes through the contact slider 8 rotating with the hub 16 and the stationary complementary contact rail 4, e.g. in the form of a ring mounted on the front of the nacelle 17. The ring, which forms the output of the lightning current transfer assembly 2, is connected to the lightning conductor 26 in the nacelle 17.
   In the embodiment of Fig. 4, the first part 5 of the parts 5, 6 rotatable relative to each other is the rotor blade 15, and the second part 6 is the rotor hub 16. Consequently, the axis 7 around which the two parts 5, 6 are rotatable relative to each other is the rotation axis of the rotor blade 15.
   The lightning current transfer assembly 2 transfers current between these two parts 5, 6 rotatable relative to each other, i.e. from the rotor blade 15 to the rotor hub 16. The complementary contact rail 4, here e.g. in the form of a belt around the root 19 of the rotor blade 15, which is connected to the lightning conductor 25 in the rotor blade 15, forms the input of the lightning current transfer assembly 2. The contact rail 4 is contacted by the contact slider 8 which rotates, together with the lightning transfer unit 2, with the rotor hub 16. Thus, current will flow from the rotor blade 15 to the lightning current transfer unit 3 across the rotative gap between the rotor blade 15 and the rotor hub 16. If the root 19 of the rotor blade 15 is made of electrically insulating material, practically all the current from the rotor blade 15 will thus bypass the blade-pitch bearing 20.
   In the embodiment of Fig. 4, the further current path goes from the output of the lightning current transfer assembly 2, which is, for example, electrically connected to the rotor hub 16, through the main shaft 21 connected to the lightning conductor 26 in the nacelle 17 by another lightning current transfer unit 3m.
   In the embodiment of Fig. 5, the first part 5 of the parts 5, 6 rotatable relative to each other is the rotor blade 15, and the second part 6 is the nacelle 17. Consequently, the two parts 5, 6 are rotatable relative to each other around two different axes, the rotation axis 7' of the rotor blade 15 and the rotation axis 7" of the rotor hub 16. While the rotation axis 7" of the rotor hub 16 is stationary, the rotation axis 7' of the rotor blade 15 permanently changes its direction upon rotation of the rotor hub 16, as the rotor blade 15 is mounted on the rotor hub 16 - it is only stationary in the rotating coordinate system of the rotor hub 16.
   The lightning current transfer assembly 2 transfers current between these two parts 5, 6 rotatable relative to each other, i.e. from the rotor blade 15 to the nacelle 17. As in Fig. 4, the complementary contact rail 4', here a belt around the root 19 of the rotor blade 15, which is connected to the lightning conductor 25 in the rotor blade 15, forms the input of the lightning current transfer assembly 2. The contact rail 4' in the form of a belt is contacted by the first contact slider 8' of the lightning current transfer unit 3. Thus, current will flow from the rotor blade 15 to the lightning current transfer unit 3 across the rotative gap between the two through the first slider-rail pair 8', 4'. The further current path crosses the second slider-rail pair 8", 4", as in Fig. 3 in the form of a contact slider 8" rotating with the hub 16 and a stationary complementary contact rail 4", e.g. in the form of a ring mounted on the front of the nacelle 17. The second contact rail 4" in the form of a ring, which forms the output of the lightning current transfer assembly 2, is connected to the lightning conductor 26 in the nacelle 17.
   If the root 19 of the rotor blade 15 is made of electrically insulating material, practically all the current from the rotor blade 15 will flow through the lightning current transfer assembly 2, so that the rotor-pitch bearing 20, the rotor hub 16 and the main-shaft bearing 22 are electrically bypassed.

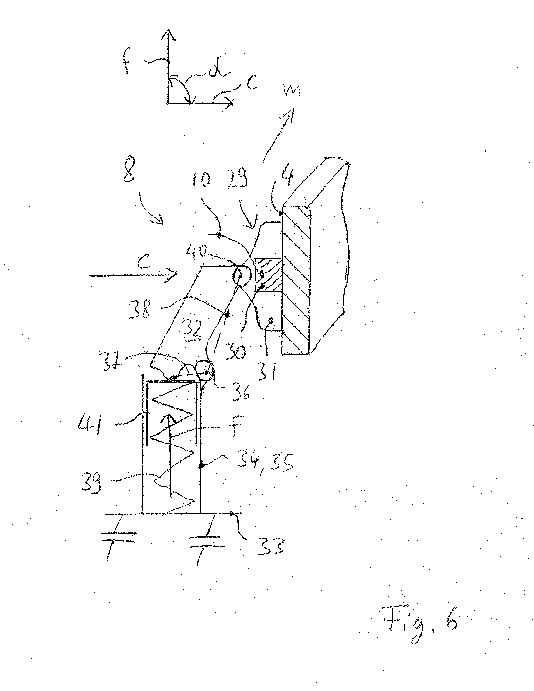

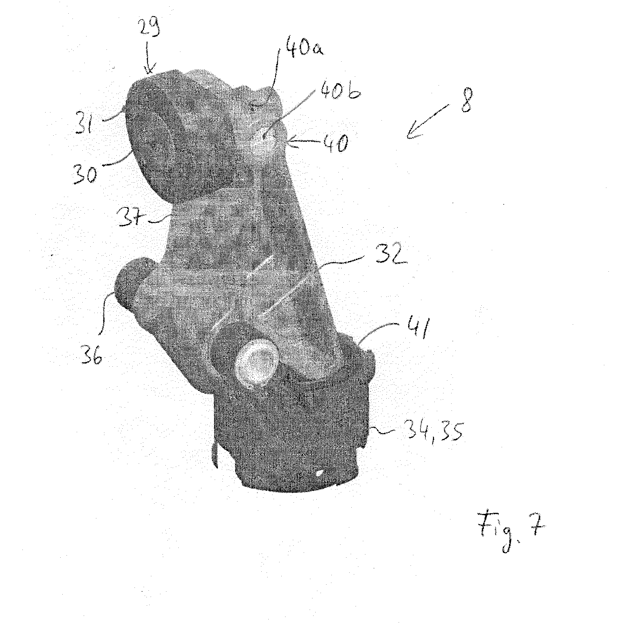

Figs. 6 and 7 (a contact-slider embodiments):
   In the embodiment of Fig. 6 the contact slider 8 has a slide piece 29. The slide piece 29 is biased with a contact force towards the complementary contact rail 4, 4', 4" (commonly denoted by 4 in Fig. 6), e.g. the form of a ring or belt, of which only a cut-out is shown in Fig. 6. It mechanically contacts the surface of the contact rail 4. The slide piece 29 and the contact rail 4 are moveable relative to each other. The movement of the contact rail relative to its complementary contact rail 4 is symbolised by an arrow m in Fig. 6. As only a cut-out is shown in Fig. 6, the relative movement appears to be linear, but is actually rotative, as described in connection with Figs. 1 to 5. The contact force, symbolised by an arrow c, is perpendicular to the tangent plane to the contact rail 4.
   The slide piece 29 is composed of an electrically conductive contact pad 30 (e.g. of a copper alloy/brass), for example in the form of a cylindrical rod, in the centre and a wear pad 31 (e.g. made of a plastic material) at the circumference of the contact pad 30.
   The contact slider 8 includes a lever 32. The lever 32 is pivotally mounted on a base support 33 with interposition of a member 34, here a spring cylinder 35, which is fixed to the base support 33. That is to say, the lever 32 is mounted on a lever pivot 36, and can swivel around a swivel axis defined by it. In the embodiment of Fig. 6, the lever 32 is a two-armed lever, with the lever pivot 36 between the two lever arms, a spring lever arm 37 and a slide-piece lever arm 38 (in other embodiments, the lever 32 is a single-armed lever). The lever 32 is elastically biased by a spring 39 at the outer end of the spring lever arm 37. At the outer end of the slide-piece lever arm 38 another pivot, that is to say slide-piece pivot 40 is provided, on which the slide piece 29 is pivotally mounted. The pivotal mounting on the lever 32 enables the slide piece 29 to maintain an orientation parallel to the complementary contact rail 4 when the lever 32 is swivelled. The parallelism is automatically maintained by the contact pressure c on the slider piece 29 towards the contact rail 4. These mechanisms compensate for variations in the distance between the base support 33 and the contact rail 4 that may occur upon relative rotation, so that mechanical/electrical contact between the slide piece 29 and the contact rail 4 is maintained.
   The slide piece 29 is elastically biased towards its complementary contact rail 4 by means of the compressed, e.g. helical, spring 39 accommodated in the spring cylinder 35. The spring 39 presses at the one end against the base support 33 and, at the other end, through a spring piston 41 against the outer end of the spring lever arm 37 of the lever 32, thereby producing torque around the axis of the lever pivot 36, which presses the slide at the other end of the lever 32, that is the outer end of the slide-piece lever arm 36, towards the complementary contact rail 4.
   The direction of the force produced by the spring 39 is denoted by f in Fig. 6. It is at an angle α to the contact-force direction c. Thus, the pivoted-lever mechanism of Fig. 6 diverts the spring-force direction f by α into the contact-force direction c. In the embodiment of Fig. 6, the angle α of the spring-force diversion is approximately a right angle (approximately 90°). With the exemplary helical spring 39, the longitudinal spring axis, which is in turn defined by the orientation of the longitudinal axis of the spring cylinder 35 accommodating the spring 39, coincides with the spring-force direction f. Thus, in the example of Fig. 6, the longitudinal axes of the spring 39 and the spring cylinder 35 are perpendicular to the contact-force direction c and parallel to the tangent plane to the contact rail 4.
   In the embodiment of Fig. 6, the length of the slide-piece lever arm 38 (which can be thought of the length of the imaginary straight line connecting the lever pivot 36 and the slide-piece pivot 40) is greater than that of the spring lever arm 37 (which can be thought of the length of the imaginary straight line connecting the lever pivot 36 and the point of the lever 32 where the spring piston 41 attaches the lever 32). As a consequence, the spring force is not only diverted in its direction, but also transformed in magnitude (in the example shown, the contact force is reduced relative to the spring force).
   The base support 33 is made of insulating material, e.g. insulating plastic, in order to isolate the contact slider 8 e.g. from the rotor hub 16 on which it is mounted. In some embodiments, the member/spring cylinder 34/35 and/or the lever 32 are also made of insulating material, e.g. insulating plastic.
   Fig. 7 shows a perspective view of a contact slider 8 similar to the schematically shown embodiment of Fig. 6. In Fig. 7, the spring cylinder 35 is only partially shown (the base support 37 is not shown). The conductive contact pad 30 is here a rearward-extending rod with a bore 40a to accommodate a slide-piece pivot-pin 40b to mount the slide piece 29 pivotally on the slide-piece lever arm 38 of the lever 32.

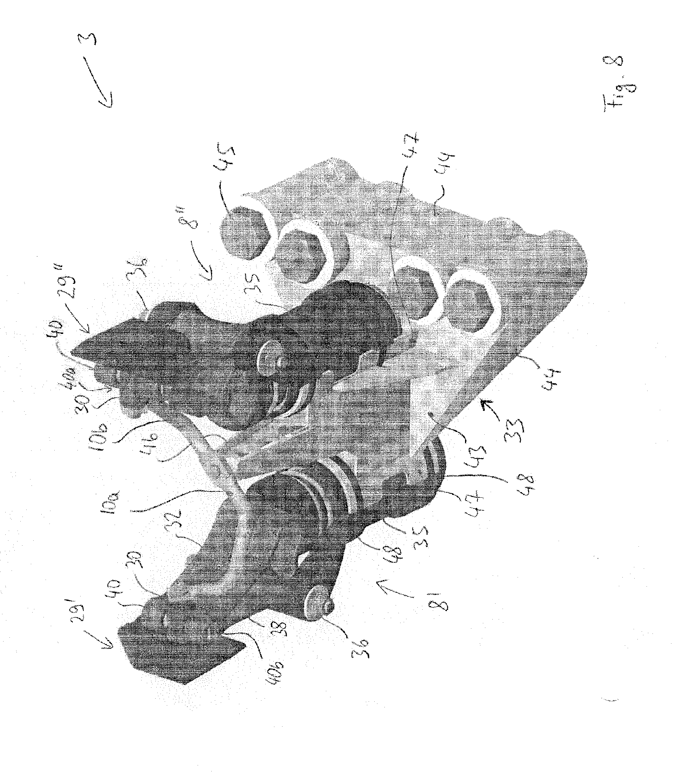

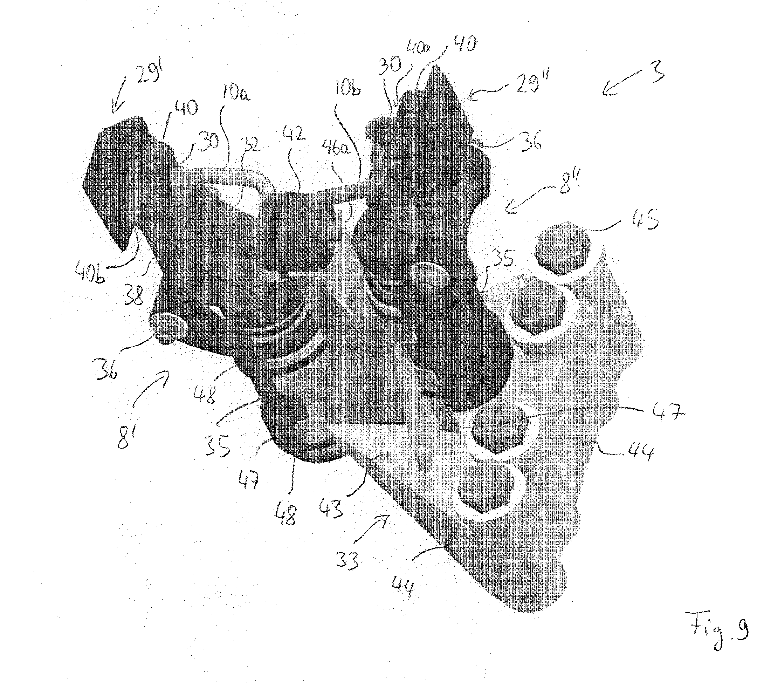

Figs. 8 and 9 (embodiment of a lightning current transfer unit without and with spark-gap assembly):
   Figs. 8 and 9 are perspective views of an embodiment of a lightning current transfer unit 3 of the type illustrated in Figs. 2 and 5. While Fig. 8 shows a version with a continuous wire connection between the two contact sliders 8', 8" (without spark gap), Fig. 9 shows another version with a spark-gap assembly 42 interposed between the two contact sliders 8', 8". Apart from this, the Figs. 8 and 9 are identical, and the following description applies to both Figs. 8 and 9.
   The lightning current transfer unit 3 enables lightning current to be transferred between two parts 5, 6 rotatable relative to each other around two different axes 7', 7". The two parts 5, 6 are, e.g., the rotor blade 15 and the nacelle 17 (Figs. 2, 5). As described in connection with Fig. 5, the lightning current transfer unit 3 is, for example, designed to be mounted on the rotor hub 16 of the wind turbine 1.
   The lightning current transfer unit 3 has two contact sliders 3', 3", e.g. of the embodiment shown and described in connection with Fig. 6 or 7. The two contact sliders 3', 3" are arranged with their slide pieces 29', 29" lying back-to-back, approximately in parallel planes, when mounted on the wind turbine 1.
   The two contact sliders 8', 8" are equipped with the pivoted-lever and force-diverting mechanism shown and described in connection with Fig. 6 and 7. As in Fig. 7, the conductive contact pad 30 is a rearward-extended rod with a bore 40a to accommodate a slide-piece pivot-pin 40b to mount the slide piece 29 pivotally on the slide-piece lever arm 38 of the lever 32.
   The base support 33 is an integral part made of insulating material, e.g. non-conductive plastic. It provides a platform 43 on side walls 44, the platform 43 being elevated above the basis to which the base support 33 is to be mounted by means of bolts 45, e.g. to the blade-pitch bearing. The bolts 45 are located at irregular distances (e.g. two farther spaced groups of closely adjacent pairs of bolts 45) corresponding to complementary bores e.g. at the blade-pitch bearing to ensure that lightning transfer unit 3 can only be mounted at a unique position. The base support 33 is a hollow body, defined by the platform 43 and the side walls 44. In the exemplary embodiment of Figs. 7 and 8, the platform 43 is triangle-shaped. The base support 37 is a hollow body, defined by the platform 43 and the side walls 44. The base support 37 has mountings for the spring cylinders 35 and a snap-in mounting for a cable-supporting stand 46. The spring-cylinder mountings 47 are e.g. brackets with a semi-cylindrical shape. The spring cylinders 35 are, for example, tied to the brackets by means of plastic bands 48.
   The exemplary embodiment shown in Figs. 8 and 9 refers to a particular case, in which the two slide pieces 29', 29" are positioned at different levels above the basis of the base support 33. Thus, only one of the spring cylinders 35 is mounted on the elevated platform 43 by means of spring-cylinder mounting 47 arranged on the platform 43, while the other spring cylinder 35 is mounted at a lower level, in the other spring-cylinder mounting 47 arranged along the side walls 44 at one of the edges of the triangle. However, in other embodiments in which the two slide pieces 29', 29" are at the same height, both spring-cylinder mountings 47 may be arranged on the elevated platform 43.
   The two contact sliders 3', 3" are electrically connected by a flexible wire 10, which runs directly from one slide piece 29' to the other 29", thereby remaining essentially at the contact sliders' height above the base support 33.
   In the version shown in Fig. 8 the flexible wire 10 is composed of two wire-halves 10a, 10b connected to each other, so that an electrically continuous wire connection from the one slide piece 29' to the other 29" is provided. Half-way between the two slide pieces 29', 29", where the wire-halves 10a, 10b are connected, the wire 10 is supported by the stand 46. The stand 46 is made of insulating material, e.g. non-conductive plastic, and is fixed to the base support 33.
   In the version shown in Fig. 9, the spark-gap assembly 42 is interposed in the wire 10 in the centre between the two slide pieces 29', 29". It is mounted on a slightly modified stand 46a, adapted to support the spark-gap assembly 42. The spark-gap assembly 42 comprises a spark gap and a resistance and constitutes the parallel connection of the spark gap 11 and the spark-gap-bridging resistance 13 described in connection with Figs. 1 to 5.
   A lightning current transfer unit 3 of the Fig. 8-version, without a spark gap, can simply be transformed into the version of Fig. 9 with a spark gap by separating the wire-halves 10a, 10b, removing the stand 46, snapping on the modified stand 46a, mounting the spark-gap assembly 42 on the stand 46a, and connecting the wire-halves 10a, 10b to it. This enables an EMC upgrade of a wind turbine 1 to be very simply achieved.

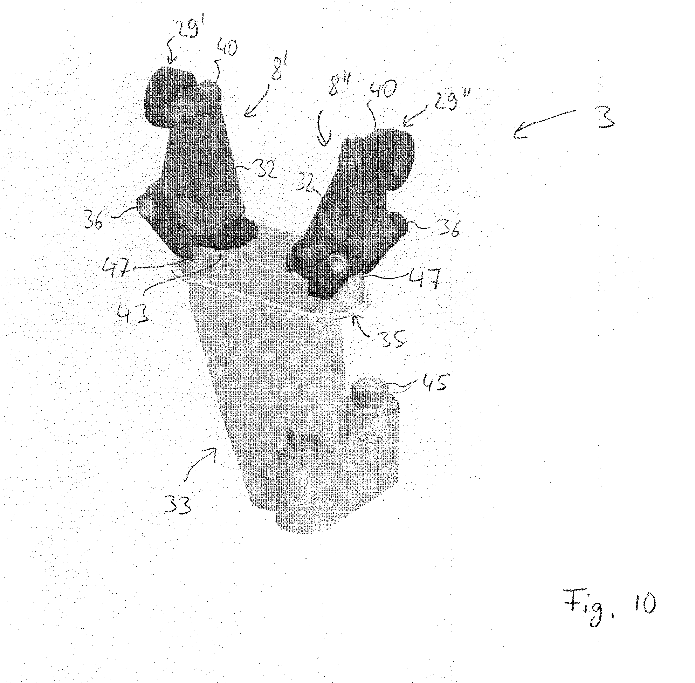

Fig. 10 (another embodiment of a lightning current transfer unit with slide pieces at the same level):
   While Figs. 8 and 9 show a case in which the two slide pieces 29', 29" are positioned at different levels above the basis of the base support 33, the embodiment of Fig. 9 illustrates another embodiment of a lightning transfer unit 3 in which the two slide pieces 29', 29" are at the same height above the basis of the base support 33.
   In Fig. 10, the spring cylinders 35 are only partially shown (the wire 10 and the stand 46 are not shown). The base support 37 has mountings 47 for the spring cylinders 35 which are, in this embodiment, bores which embrace the whole circumference of the spring cylinders 35 (not only half of it, as the brackets in Figs. 8 and 9). In this embodiment, the elevated platform 43 has a generally rectangular shape, with rounded edges. Apart from this, the embodiment of Fig. 10 is also equipped the pivoted-lever and force-diverting mechanism shown and described in connection with Figs. 6 to 9.
   All publications mentioned in this specification are herein incorporated by reference.
   Although certain methods and products constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

## Claims

1. A lightning current transfer unit (3) for a wind turbine (1) comprising at least a first part (5) and a second part (6) rotatable relative to each other, the lightning current transfer unit (3) comprising at least one contact slider (8, 8', 8") arranged to contact a complementary contact rail (4, 4', 4"), which is movable relative to the contact slider (8, 8', 8"), to transfer lightning current from the first part (5) to the second part (6), the contact slider (8, 8', 8") comprising:
- a slide piece (29, 29', 29"),
- at least one pivoted lever (32), and
- at least one spring (39);
wherein the slide piece (29, 29', 29") is mounted on the pivoted lever (32);
wherein the slide piece (29, 29', 29") is biased towards the complementary contact rail (4, 4', 4") in a contact-force direction (c);
wherein the spring (39) applies an elastic spring force to the pivoted lever (32) in a spring-force direction (f), the spring-force direction (f) being at an angle (α) to the contact-force direction (c); and
wherein the pivoted lever (32) diverts the spring force from the spring-force direction (f) to the contact-force direction (c).

2. The lightning current transfer unit of claim 1, wherein the spring-force direction (f) is transverse to the contact-force (c) direction.

3. The lightning current transfer unit of claim 1 or 2, wherein the slide piece (29, 29', 29") is pivotally mounted on the pivoted lever (32).

4. The lightning current transfer unit of any one of claims 1 to 3, wherein the slide piece (29, 29', 29") comprises an electrically conductive contact pad (30) and a wear pad (31) surrounding the contact pad (30) at least partially.

5. The lightning current transfer unit of any one of claims 1 to 4, comprising a base support (33) made of insulating material which supports the at least one pivoted lever (32) with the slide piece (29, 29', 29").

6. The lightning current transfer unit of claim 5, wherein the at least one pivoted lever (32) is pivotally mounted on the base support (33) or on a member (34) fixed to the base support (33).

7. The lightning current transfer unit of any one of claims 1 to 6, wherein the at least one spring (39) is arranged in a spring cylinder (35).

8. The lightning current transfer unit of any one of claims 5 to 7, wherein the at least one spring (39) is arranged in a spring cylinder (35), the at least one spring cylinder is mounted on the base support (33), and the pivoted lever (32) is pivotally mounted on the at least one spring cylinder (35).

9. The lightning current transfer unit of any one of claims 1 to 8, wherein the first and second parts (5, 6) rotatable relative to each other are a rotor blade (15) and a rotor hub (16) or shaft (21), or a rotor hub (16) or shaft (21) and a nacelle (17), or a nacelle (17) and a tower (18), of the wind turbine (1).

10. The lightning current transfer unit of any one of claims 1 to 8, wherein the first part is a rotor blade (15), and the second part is a nacelle (17) of the wind turbine (1), and the lightning current transfer unit (3) is arranged to be mounted on the rotor hub (16) and to provide a direct lightning-current path from the rotor blade (15) to the nacelle (17) by means of at least one first contact slider (8') towards the rotor blade (15) and at least one second contact slider (8") towards the nacelle (17).

11. The lightning current transfer unit of claim 10, wherein the lightning-current path provided by the lightning current transfer unit (3) is electrically isolated from the rotor hub (16), so that lightning current bypasses the rotor hub (16) and rotation-enabling bearings (20, 22) between the rotor blade (15) and the rotor hub (16) and between the rotor hub (16) and the nacelle (17).

12. The lightning current transfer unit of claim 10 or 11, wherein the first contact slider (8') towards the rotor blade (15) and the second contact slider (8") towards the nacelle (17) are connected by a wire (10, 10a, 10b).

13. The lightning current transfer unit of claim 10 or 11, wherein the first contact slider towards (8') the rotor blade (15) and the second contact slider (8") towards the nacelle (17) are connected by a flexible wire (10, 10a, 10b) above the base support (33).

14. The lightning current transfer unit of claim 13, wherein the flexible wire (10, 10a, 10b) is supported by an isolating stand (46, 46a) mounted on the base support (33).

15. The lightning current transfer unit of claim 13 or 14, wherein a spark gap (11) is interposed in the wire (10, 10a, 10b) connecting the first and second contact sliders (8', 8").

16. A wind turbine (1) comprising at least one lightning current transfer unit (3) according to any one of claims 1 to 15.
